# EUROPÄISCHE PATENTSCHRIFT

(11) **EP 1 826 249 B1**
(45) Veröffentlichungstag und Bekanntmachung des Hinweises auf die Patenterteilung: **24.12.2008**
(21) Anmeldenummer: 07003273.5
(22) Anmeldetag: 16.02.2007
(51) Int. Cl.: C09D 4/00, C09D 5/14

(54) **Verwendung einer Behälterverschlussbeschichtungszusammensetzung, Behälterverschlussbeschichtung als antibakterielles Mittel, deren Herstellung und Aufbringung**
Utilisation of a coating compound for a container lock, container lock coating as antibacterial agent, its manufacture and application
Utilisation d'une composition de revêtement de fermeture de récipient, revêtement de fermeture de réception en tant qu'agent antibactérien, son utilisation et son application

(30) Priorität: 22.02.2006 DE 102006008534
(43) Veröffentlichungstag der Anmeldung: 29.08.2007
(73) Patentinhaber: Stiftung nano innovations -for a better living, 4600 Olten/Kanton Solothurn (CH)
(72) Erfinder: Jürgens, Ralf, 24558 Henstedt-Ulzburg (DE); Schwindt, Sascha, 66121 Saarbrücken (DE)
(74) Vertreter: Sieckmann, Ralf

(56) Entgegenhaltungen:
- US-A1- 2004 134 384

## Beschreibung

Die Erfindung betrifft die Verwendung einer nanoskaligen Beschichtung auf der Basis von mittels eines modifizierten SolGel-Pozesses erzeugtem polymerisiertem SiO₂ mit darin eingelagerten Wirkstoffen als Biozid, die Herstellung der Beschichtung, die Weiterverarbeitung der Beschichtung sowie ihre Verwendung als Veredelung von Verschlüssen für Behälter aus Kunststoff, insbesondere Flaschen.

### Stand der Technik:

DE 101 39 305 A1 beschreibt eine Barrierebeschichtung, die auf das Substrat mittels chemischer Plasma-Impuls-Bedampfung (PiCVD) aufgebracht wird. Dabei kann die Beschichtung aus SiOₓ, TiOₓ, SnOₓ NbₓO_{y} und AlₓO_{y}, und amorphen Kohlenwasserstoffen sowie elektrisch leitfähige Schichten bestehen. In einer bevorzugten Ausführungsform weist die Barrierebeschichtung eine Dicke > 1000 nm, bevorzugt < 300 nm auf.

US-A 5 348 799 beschreibt antistatische Beschichtungen auf Basis von 35 - 99 % Siliziumdioxid und 1 bis 65 % Chitosansäuresalzen, die auf Kunststoffe in einer Dicke von 25 - 2000 nm aufgebracht worden sind.

Die Koreanische Offenlegungsschrift KR2002018175 A1 beschreibt die Herstellung einer SiO₂/Chitosan Zusammensetzung über den Sol/Gel Prozess mit einer glas- oder keramikartigen Struktur, die als Absorptionsmittel bei der Abwasserbehandlung, zur Absorption von Schwermetallen, radioaktiven Stoffen, Recycling von Wertstoffen eingesetzt werden soll.

Es ist bereits bekannt, antibakterielle bzw. antimikrobielle Wirkstoffe zur Vernichtung bzw. Wachstumshemmung von Bakterien, Pilzen, Algen und Viren und zum Schutz von Materialien und Lebensmitteln gegen mikrobielle Verunreinigung einzusetzen. Die umgebungsbedingte, mikrobielle Kontamination durch ca. 2 bis 3 Milliarden unterschiedlicher Mikroorganismen, davon allein ca. 15.000, die sich über die Luft ausbreiten und somit nahezu jede Oberfläche besiedeln können, stellt ein stetig wachsendes gesundheitliches Gefährdungspotenzial dar. Im Folgenden wird für die Wirkung der Substanzen der Begriff "antimikrobiell" verwendet, damit ist die biozide bzw. biostatische Wirkung auf Mikroorganismen gemeint.

Als antimikrobielle Wirkstoffe werden anorganische Chemikalien und Metallverbindungen wie z.B. Silberzeolith (Kanedo), Silbersilikat, Silbersulfonat und Silbermetall, Titanoxid, lösliches Glaspulver mit Metallionen, Eisen-Phthalocyanat, Kupfersulfonat, Zink-Pyrithion; Organosilikone wie z.B. organisches Silikon mit Ammoniumsalz: Octadecyldimethyl-(3-(trimethoxysilyl)-propyl)-ammoniumchlorid; quaternisierte Ammoniumsalze, wie z.B. Didecyldimethylammoniumchlorid, Hexadecylpyridiniumchlorid, Cetyldi-methylbenzylammoniumchlorid, Polyoxyalkyltrialkylammoniumchlorid; Tenside, wie z.B. amphoteres Tensid: Alkyldi(aminoethyl)glycin, nichtionogenes Tensid: Glycerinstearat; Guanidin wie z.B. 1,1-Hexamethylen-bis-5-(4-chlorphenyl)-biguanid-digluconat, Polyhexa-methylenbiguanidhydrochlorid; Phenole wie z.B. Biozol, Thymol, Alkylenbisphenol-Natriumsalz, *p*-Chlor-*m*-xylenol (PCMX), 5-Chlor-2-(2,4-dichlorphenoxy)-phenol (Triclosan); Aniline wie z.B. 3,4,4-Trichlorcarbanilin, Imidazole wie z.B. 2-(4-Thiazolyl)-benzimidazol, 2-(Thiocyanomethylthio)-benzothiazol (TCMTB); Naturprodukte wie Chitosan, Propolis, Hinokitol; Kohlenhydrate wie z.B. Neomycinsulfat, Ester wie z.B. Diethylphthalat, Parabene zum Einsatz gebracht.

Ebenso ist es bekannt, Sol-Gel-Schichten mittels eines Sol-Gel-Prozesses zu erzeugen. Dabei werden vorzugsweise Metalloxid-Xerogele aus SiO₂, R-SiOₙ, R₂SiOₙ, Al₂O₃, ZrO₂, TiO₂ oder deren Gemische verwendet, wobei R = H, Alkyl, Aryl, Epoxi-alkyl, Aminoalkyl- und n = 1,5 oder 1 sein kann. Diese Gele erhält man durch die Hydrolyse und Kondensationsreaktionen von Siliziumalkoxiden. Dabei werden die Moleküle auf Grund der während des Prozesses stattgefundenen Polymerisation miteinander verbunden. Das gesamte Volumen der Sole wird dabei polymerisiert. Die polymerisierten Siliziumoxide bilden ein SiO₂-Gel. Der schematische Aufbau des SolGel-Prozesses verläuft wie folgt.

Die US 2004/0134384 A beschreibt Beschichtungen enthaltend mit Tetramethoxysilan ein SiO₂ erzeugendes Mittel und Chitosan. Dort ist aber weder beschrieben noch nahegelegt eine Verwendung eines deacetylierten Chitosans als antibakteriellen Wirkstoff, als Behälterverschlussbeschichtung, sowie ein Verfahren zur Herstellung der Behälterverschlussbeschichtung.

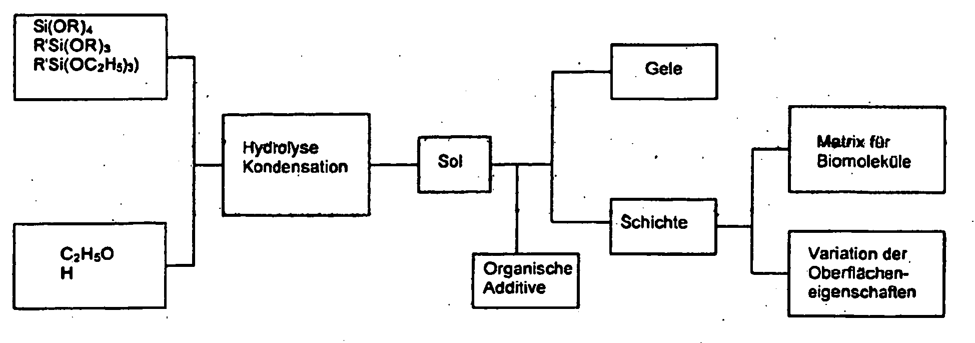

Die fortlaufende Kondensation unter Alkoholabspaltung führt zu einem sphärischen Anwachsen der Partikel, was sich ab einer Dicke von ca. 70 nm auf Grund der Lichtstreuung an den Partikeln (Tyndall-Effekt) nachweisen läßt. Durch einen als Gelierung bezeichneten Vorgang können Sole in Gele übergehen. Die Partikel wachsen weiter, bis sie sich berühren und durch weitere Kondensation miteinander vernetzen. Letztendlich bildet sich dabei eine feste Phase aus, die mit einer flüssigen Phase durchdrungen ist. Als Gele werden formbeständige, leicht deformierbare, an Flüssigkeit reiche disperse Systeme bezeichnet, die aus einem festen, unregelmäßigen dreidimensionalen Netzwerk und einer Flüssigkeit bestehen.

Zur Funktionalisierung werden dem Sol aus Tetraethoxysilan, Trimethoxymethylsilan, oder Dimethoxydimethylsilan zum einen aliphatische und aromatische Aldehyde, Carbonsäuren oder Aminocarbonsäuren zugesetzt. Alternativ wird durch veränderte Substituenten am Precursor (R'Si(OC₂H₅)₃) das SiO₂-Netzwerk organisch modifiziert. Ebenfalls wird dafür die Synthese verschiedener Alkyltriethoxysilane mit Azomethinbindung durch die Umsetzung von Aminopropyltriethoxysilan mit Benzaldehydderivaten bzw. Acetylaceton genutzt.

Anorganisch-oxidische Gele werden häufig durch Umsetzung von Elementalkoxiden mit Alkohol-Wasser-Mischungen oder in reinem Wasser hergestellt. Der Alkohol dient hierbei der Erzeugung eines homogenen Reaktionsgemisches und kann durch andere protische oder aprotische Lösungsmittel ersetzt werden. Die Flexibilität und Porosität der Sol-Gel-Schichten lassen sich durch Modifikation der Rezepturen verändern. Ein höherer Anteil von R-SiOₙ und/oder R₂SiOₙ verbessert die Flexibilität der Schichten, durch die Bildung von Mischoxiden wie Al₂O₃, ZrO₂, TiO₂ kann die Abrasionsbeständigkeit und spezifische Härte verstärkt werden.

Die Substitutions-/ Hydrolysereaktion von Siliziumalkoxiden verläuft wie folgt.

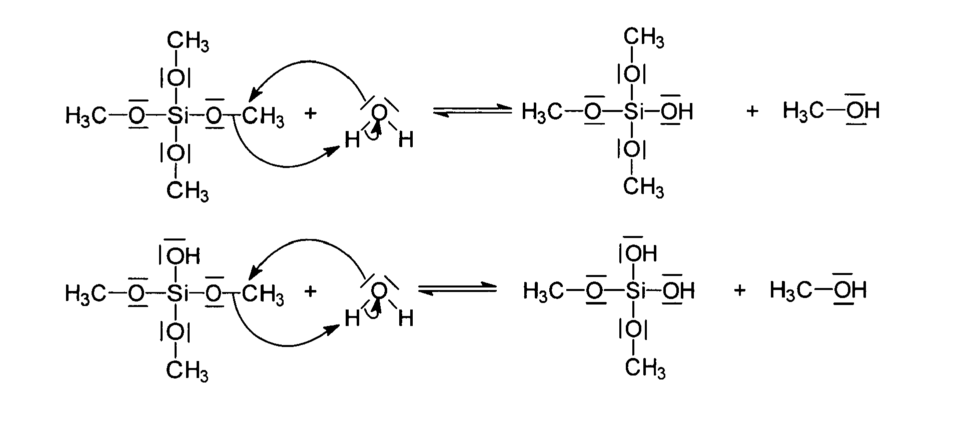

### Erfindung

### Zusammensetzung

Der vorliegenden Erfindung liegt zunächst die Aufgabe zugrunde, eine spezielle antibakterielle Zusammensetzung zur Beschichtung eines Behälterverschlusses aus Kunststoff bereitzustellen.

Diese Aufgabe wird durch die Auswahl eines speziellen Mengenintervalls eines SiO₂-erzeugenden Mittels zusammen mit einem speziellen Mengenintervall spezieller antibakteriell wirkender Stoffe gelöst.

Die Erfindung betrifft daher die Verwendung einer Beschichtungszusammensetzung, enthaltend 50 Gew-% bis 99,9 Gew.-%, vorzugsweise 80 % bis 99 Gew-%, eines SiO₂-erzeugenden Mittels, wobei die Beschichtungszusammensetzung 0,1 Gew-% bis 50 Gew-%, vorzugsweise 1 Gew-% bis 20 Gew-%, bezogen auf die Gesamtzusammensetzung, wenigstens eines Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält, als antibakterieller Wirkstoff, dadurch gekennzeichnet, daß der antibakterielle Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Nach einer bevorzugten Ausführungsform werden miteinander kompatiblen bioziden Wirkstoffen wie Chitosan, 2,4,4'-Trichlor-2'-hydroxy-diphenylether und quartären Ammoniumsalzen, mit sich ergänzenden Wirkungen auf Mikroorganismen, die nicht-eluierbar in die SiO₂-Matrix der Beschichtung verankert werden, verwendet.

Unter Behälterverschluss aus Kunststoff in Sinne der vorliegenden Erfindung versteht man beispielsweise einen am Behälter befestigten oder abnehmbaren Verschluss wie beispielsweise Schraubdeckel, Zwischendeckel, Überkappe, Pipettenmontur, Zerstäuberpumpe, Lotionspumpe, Schraubverschluss mit Tropfeinsatz, Scharnierverschluss, (ablösbare) Klappdeckel, Stöpsel, Schliffstöpsel, Korken usw. Bevorzugt ist der Verschluss ein Korken oder ein anderer abnehmbarer Verschluss.

Nach einer bevorzugten Ausführungsform betrifft die vorliegende Erfindung eine Verwendung der Zusammensetzung der vorgenannten Art, wobei das SiO₂-erzeugenden Mittel ausgewählt ist aus
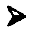 0 bis 100 Gew-%, vorzugsweise 1 bis 99 Gew-% Tetraethoxysilan,
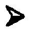 0 bis 100 Gew-%, vorzugsweise 1 bis 99 Gew-% Trimethoxymethylsilan und
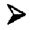 0 bis 100 Gew-%, vorzugsweise 1 bis 99 Gew-% Dimethoxydimethylsilan.

Nach einer bevorzugten Ausführungsform betrifft die vorliegende Erfindung eine Verwendung der Zusammensetzung der vorgenannten Art, wobei das SiO₂ erzeugende Mittel weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Nach einer bevorzugten Ausführungsform betrifft die vorliegende Erfindung eine Verwendung der Zusammensetzung der vorgenannten Art, wobei das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-diydroxy-diphenylmethan, 3,5,6,3',5',6'-Hexchlor-2,2'-diydroxy-diphenylmethan, 5,5'-Dichlor-2,2'-dihydroxy-diphenylsulfid, 2,4,5,2'4',5' Hexachlordihydroxy-diphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

Weiter sind dies Phenole in der SiO₂-Matrix, die bevorzugte Gruppe sind die halogenierten Dihydroxydiphenylmethane, sulfide, und -ether, die beispielsweise ausgewählt sind aus 5,5'-Dichlor-2,2'-dihydroxy-diphenylmethan (Preventol DD, Bayer AG), 3,5,3',5'-Tetrachlor-4,4'-dihydroxy-diphenylmethan (Monsanto Corporation), 3,5,6,3',5',6'-Hexchlor-2,2'-diydroxy-diphenylmethan (Hexachlorophen), 5,5'-Dichlor-2,2'-dihydroxy-diphenylsulfid (Novex, Boehringer Mannheim), 2,4,5,2'4',5'Hexachlor-dihydroxy-diphenylsulfid, 3,5,3',5'-Tetrachlor-2,2'-Dihydroxy-diphenylsulfid (Actamer, Monsanto), 4,4'-Dihydroxy-2,2'dimethyl-diphenylmethan, 2'2-Dihydroxy-5',5-diphenylether (Unilever), 2,4,4'Trichlor-2'-hydroxy-diphenylether (Irgasan DP 300, Ciba-Geigy).

Nach einer bevorzugten Ausführungsform betrifft die vorliegende Erfindung eine Verwendung der Zusammensetzung der vorgenannten Art, wobei es sich bei dem Phenol um 2,4,4'Trichlor-2'-hydroxy-diphenylether handelt.

Besonders bevorzugt sind hier die halogenierten Dihydroxydiphenylmethane und hier insbesondere das 2,4,4'Trichlor-2'-hydroxy-diphenylether (Triclosan), welches in vielen anderen Produkten bereits zur Anwendung kommt und auf seine Toxizität für den Menschen hinreichend untersucht ist.

Weiterhin als Wirkstoffe werden substituierte quartäre Ammoniumsalzen der alkylierten Phosphorsäure eingesetzt, deren biostatische Wirkung in zahlreichen Veröffentlichungen dokumentiert ist. Wegen der sehr guten Wasserlöslichkeit dieser Salze ist ihre Einbindung in die SiO₂-Matrix besonders vorteilhaft. Auch halogenierte quartäre Ammoniumsalze wie das Cetyltrimethylammoniumbromid, haben ihre antimikrobielle Wirkung unter Beweis gestellt und können in der SiO₂-Matrix zum Einsatz kommen.

Das Mischungsverhältnis der antimikrobiellen Wirkstoffe Chitosan, 2,4,4'Trichlor-2'-hydroxy-diphenylether (Triclosan) und quartäre Ammoniumsalze in der Sole untereinander ist ebenfalls von Bedeutung. In Summe können die antimikrobiellen Wirkstoffe zwischen 0,1 Gew-% und 50 Gew-%, vorzugsweise 1 bis 20 % bezogen auf die Gesamtzusammensetzung der Sole ausmachen. Der Anteil der jeweiligen antimikrobiellen Wirkstoffe kann dabei zwischen 1 Vol-% und 98 Vol-% liegen. Durch unterschiedliche Rezepturen (Mengenanteile) kann die antimikrobielle Wirkung auf die jeweilige Schimmelpilzpopulation zum Zweck der höchsten Wirkung eingestellt werden.

Nach einer bevorzugten Ausführungsform betrifft die vorliegende Erfindung eine Verwendung der Zusammensetzung der vorgenannten Art, wobei es sich um kationischen, anionischen oder nichtionischen deacetylierten Chitosane und Chitosanderivate handelt, vorzugsweise um Trimethylchitosaniumchlorid, das Dimethyl-*N*-_{*C*2*bis*C*12*}-alkylchitosaniumiodid, quartäre Chitosansalze mit Anionen der Phosphorsäure, *O*-Carboxymethylchitin-Natriumsalze, *O*-Acylchitosan, *N,O-*Acylchitosan, *N*-3-Trimethylammonium-2-hydroxypropyl-chitosan und *O*-TEAE-Chitiniodid.

Nach einer bevorzugten Ausführungsform betrifft die vorliegenden Erfindung eine Verwendung der Zusammensetzung der vorgenannten Art, wobei die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise zwischen 2,5 x 10⁵ g/mol und 9,5 x 10⁵ g/mol liegen.

Nach einer bevorzugten Ausführungsform betrifft die vorliegende Erfindung eine Verwendung der Zusammensetzung der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung eine Verwendung der Zusammensetzung der vorgenannten Art, wobei die mikrobiellen Wirkstoffe in Mischungsverhältnissen zwischen 0,1 Gew-% bis 99,9 Gew-%, vorzugsweise 1 bis 99 Gew-%, insbesondere 5 bis 95 Gew-% vorliegen.

Nach einer bevorzugten Ausführungsform betrifft die vorliegende Erfindung eine Verwendung der Zusammensetzung der vorgenannten Art, weiterhin enthaltend übliche Hilfs- und Zusatzstoffe, insbesondere saure und basische Polykondensations-Katalysatoren und / oder Flouridionen.

### Beschichtung

Der Erfindung liegt weiter die Aufgabe zugrunde, eine Kombination verschiedener biozider Wirkstoffe wie Chitosan, 2,4,4'Trichlor-2'-hydroxy-diphenylether und quartärer Ammoniumsalze in einer nanoskaligen Behälterverschluß-, insbesondere Oberflächenbeschichtung als neue Verwendung zur Verfügung zu stellen, die die Besiedlung der Kunststoffoberflächen durch Bakterien, Viren, und vorzugsweise Schimmelpilzen verhindert.

Die erfindungsgemäße Aufgabe wird dadurch gelöst, dass spezielle antimikrobielle Wirkstoffe in einer aus polymerisiertem SiO₂ (Softkeramik) bestehende nanoskalige Behälterverschluss- insbesondere Oberflächenbeschichtung auf Kunststoff verwendet werden, die das Wachstum von Schimmelpilzen auf eben dieser Verschlussinsbesondere Oberfläche stoppen.

Die Erfindung betrifft daher die Verwendung einer nanoskaligen, insbesondere 50 nm bis 300 nm, vorzugsweise zwischen 120 nm und 250 nm dicke Behälterverschlussbeschichtung, als antibakterielles Mittel, enthaltend eine nicht poröse anorganische polymerisierte SiO₂-Schicht, aufgebracht auf einen Behälterverschluss aus Kork, Kunststoff und/oder Glas, wobei die Beschichtung 0,1 Gew-% bis 50 Gew-%, vorzugsweise 1 % bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält,
**dadurch gekennzeichnet, dass**
der antibakteriellen Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Nach einer bevorzugten Ausführungsform betrifft die vorliegende Erfindung eine Verwendung der Behälterverschlussbeschichtung der vorgenannten Art, wobei das halogenierte Dihydroxydiphenylmethan, -sulfid und -ether ausgewählt ist aus 5,5'-Dichlor-2,2'-diydroxy-diphenylmethan, 3,5,3',5'-Tetrachlor-4,4'-diydroxy-diphenylmethan, 3,5,6,3',5',6'-Hexchlor-2,2'-dihydroxy-diphenylmethan, 5,5'-Dichlor-2,2'-dihydroxy-diphenylsulfid, 2,4,5,2'4',5' Hexachlor-dihydroxy-diphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

Nach einer bevorzugten Ausführungsform betrifft die vorliegende Erfindung eine Verwendung in einer Behälterverschlussbeschichtung der vorgenannten Art, wobei es sich bei dem Phenol um 2,4,4'Trichlor-2'-hydroxy-diphenylether handelt.

Nach einer bevorzugten Ausführungsform betrifft die vorliegende Erfindung eine Verwebndung in einer Behälterverschlussbeschichtung der vorgenannten Art, wobei es sich um kationischen, anionischen oder nichtionischen deacetylierten Chitosane und Chitosanderivate handelt, vorzugsweise um Trimethylchitosaniumchlorid, das - Dimethyl-*N*-alkylchitosaniumiodid, quartäre Chitosansalze mit Anionen der Phosphorsäure, *O*-Carboxymethylchitin-Natriumsalze, *O*-Acylchitosan, *N,O-*Acylchitosan, *N*-3-Trimethylammonium-2-hydroxypropyl-chitosan und *O*-TEAE-Chitiniodid.

Nach einer bevorzugten Ausführungsform betrifft die vorliegende Erfindung eine Verwendung in einer Behälterverschlussbeschichtung der vorgenannten Art, wobei die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise jedoch zwischen 2,5 x 10⁵ g/mol und 9,5 x 10⁵ g/mol liegen.

Nach einer bevorzugten Ausführungsform betrifft die vorliegende Erfindung eine Verwendung in einer Behälterverschlussbeschichtung der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung eine Verwendung in einer Behälterverschlussbeschichtung der vorgenannten Art, wobei die antimikrobiellen Wirkstoffe in beliebigen Mischungsverhältnissen zwischen 0,1 Gew-% und 99,9 Gew-%, vorzugsweise 1 Gew- % bis 99 Gew-% vorliegen.

Nach einer bevorzugten Ausführungsform betrifft die vorliegende Erfindung eine Verwendung in einer Behälterverschlussbeschichtung der vorgenannten Art, wobei die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1,5 oder größer ist.

Nach einer bevorzugten Ausführungsform betrifft die vorliegende Erfindung eine Verwendung in einer Behälterverschlussbeschichtung der vorgenannten Art, wobei die SiO₂ Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Nach einer bevorzugten Ausführungsform betrifft die vorliegende Erfindung eine Verwendung in einer Behälterverschlussbeschichtung der vorgenannten Art, wobei sie auf Kunststoff, insbesondere aus Polyester, Polypropylen, Polyethylen hoher Dichte, Polyethylen niedriger Dichte, Polyacrylnitril, Polyamid, Polyimid, Polyaramid, Aramid, meta-Aramid, para-Aramid, Polytetrafluorethylen, Polyvinylidenfluorid, Polyphenylensulfid, polycyclische Kohlenwasserstoffe, Polycarbonate, Polyethylenterephthalate, Polystyrol, Polymethylmetacrylat aufgebracht ist.

Nach einer bevorzugten Ausführungsform betrifft die vorliegende Erfindung eine antimikrobielle Behälterverschlussbeschichtung der vorgenannten Art, wobei sie auf ein Kunststoffverbundmaterial und / oder ein Verbundmaterial aus Kunststoff und Naturkork, vorzugsweise ein mit Kunststoff beschichteter Naturkork aufgebracht ist.

Es können Behälterverschlüsse aus kunststoffbeschichtetem Metallblech oder Kunststoff eingesetzt werden. Durch die duktilen, jedoch gleichzeitig flexiblen Eigenschaften der Beschichtungen (Softkeramik) lassen sich alle geometrischen Formen behandeln, dabei entsteht immer eine sehr glatte, homogene Oberfläche niedrigster Oberflächenspannung. Die Schichten können in unterschiedlichen Dicken von 50 nm bis 500 hergestellt werden, vorzugsweise jedoch in Schichten zwischen 120 nm und 250 nm.

Die Vorteile der erfindungsgemäßen antimikrobiellen Beschichtung von Kunststsoffkorken und Gefäßverschlüssen bestehen im Wesentlichen aus den folgenden Punkten:
1. Sehr hohe Hydrophobie- und Oleophobiewerte, vergleichbar mit den Werten von Beschichtungen, die mittels Fluor-Carbon-Harzen erzeugt werden. Damit einher geht eine extrem starke antiadhäsive Wirkung, die die des PTFE noch übertrifft, es werden Kontaktwinkel von 139,5 ° erzielt (Institut Hohenstein). Dies ist vorteilhaft, um die Erstbesiedlung der Oberflächen durch Schimmelpilze und andere Mikroorganismen zu verhindern, die vor der Besiedlung des Substrates durch die Abgabe eines klebrigen Sekrets quasi testen, ob die Fläche für eine Besiedlung geeignet ist. Da dieses Sekret auf der oleophoben Fläche kaum haften bleibt, kommt es in vielen Fällen erst gar nicht zu einer Besiedlung und in Folge zu einer Koloniebildung.
2. Die sehr gut haftende Beschichtung lässt sich wegen der sehr guten duktilen Eigenschaften auf Substrate unterschiedlichster Geometrie und Beschaffenheit auftragen.
3. Die SiO₂-Matrix (Glas) ist sehr abrasionsbeständig und zeichnet sich durch nicht messbaren Abrieb und eine sehr große Härte aus. Auf Grund der ultradünnen Schichten von < 250 nm behält die Glasschicht ihre sehr guten flexiblen Eigenschaften. Die Dichtungseigenschaften des Kunststoffkorkens zur Flaschenwand hin werden in keiner Weise beeinträchtigt.
4. Die Immobilisierung der antimikrobiellen Wirkstoffe verhindert die Eluierung und Verdünnung der Wirkstoffe und somit ein Abnehmen der antibakteriellen Wirkung.
5. Die Beschichtungszusammensetzung besteht aus nicht-toxischen Verbindungen, die biologisch abbaubar sind. Silikate wie das SiO₂ sind die am häufigsten vorkommenden Verbindungen der Erdkruste.
6. Durch die Mischung unterschiedlichster antimikrobieller Substanzen kann ein Breitband-Antimikrobiotikum hergestellt werden, das geeignet ist, auch stark heterogene Schimmelpilzpopulationen zu bekämpfen. Die Rezeptur kann den jeweiligen ambienten Anforderungen angepasst werden.

### Herstellung

Aufgabe der der Erfindung ist weiterhin die Herstellung der Behälterverschlussbeschichtungszusammensetzung.

Diese Aufgabe wird durch die Bereitstellung und Auswahl eines speziellen Mengenintervalls eines SiO₂-erzeugenden Mittels zusammen mit einem speziellen Mengenintervall spezieller Wirkstoffe und Umsetzung zur Zusammensetzung gelöst.

Die Erfindung betrifft daher ein Verfahren zur Herstellung einer Behälterverschlussbeschichtung der vorgenannten Art, wobei
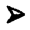 in einem ersten Verfahrensschritt die Bildung eines Solgels mit nanoskaligen Partikeln in an sich bekannter Weise durch Hydrolyse eines Prekursors in Wasser durchgeführt wird und
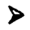 in einem zweiten Verfahrensschritt die in einem hydrophilen Lösemittel gelösten /dispergierten antimikrobiellen Wirkstoffe gemäß Ansprüchen 1 bis 11 der Sole zugeführt werden.

Nach einer bevorzugten Ausführungsform betrifft die vorliegende Erfindung ein Verfahren der vorgenannten Art, wobei der Prekusor ausgewählt ist aus der Gruppe der Alkyltriethoxysilane und der Aminopropyltriethoxysilane, dem bis zu 20 Gew.-% Al₂O₃, TiO₂, ZrO₂, MgO und / oder V₂O₅, bezogen auf den Gesamtanteil an SiO₂, zugefügt worden sind, und die Umsetzung innerhalb von 24 Stunden bei 20° C erfolgt.

Nach einer bevorzugten Ausführungsform betrifft die vorliegende Erfindung ein Verfahren der vorgenannten Art, wobei das hydrophile Lösemittel ausgewählt ist aus Wasser und / oder linearen oder verzweigten Alkoholen mit bis zu 6 Kohlenstoffatomen, insbesondere Wasser enthaltenden Alkoholen, insbesondere Ethanol.

### Applikation

Aufgabe der der Erfindung ist weiterhin die Aufbringung der Behälterverschlussbeschichtungszusammensetzung auf dem Behälterverschluss.

Diese Aufgabe wird durch die Bereitstellung und Auswahl eines speziellen Mengenintervalls eines SiO₂-erzeugenden Mittels zusammen mit einem speziellen Mengenintervall spezieller Wirkstoffe und dessen Aufbringung auf der Behälterverschlussoberfläche gelöst.

Die Erfindung betrifft daher ein Verfahren zur Aufbringung der Zusammensetzung, der vorgenannten Art auf Trägermaterialien durch Kontaktieren der Oberfläche, insbesondere Sprühen, Tauchen, Schleudern, Streichen, Begießen, Filmbegießen und Sprühbalken mit wenigstens einer Sprühdüse.

Die Beschichtung der Behälterverschlüsse, insbesondere Korken kann durch übliche Verfahren wie Sprühen (spray coating), Tauchen (dip coating), Schleudern (spin coating), Streichen, Begießen erfolgen. Ebenfalls möglich und erprobt sind industrielle Beschichtungsverfahren wie, Filmbegießmaschinen, Sprühbalken mit einer oder mehrerer Sprühdüsen.

Die Erfindung betrifft schließlich einen Behälterverschluss der vorgenannten Art, wobei die Beschichtung eine Barriere gegen Stoffe aus der Atmosphäre und / oder Stoffe, die in direktem Kontakt mit dem Behälterverschluss stehen und / oder im Verschluss enthalten oder aus diesem abgespalten werden, bildet.

Die Erfindung betrifft schließlich einen Behälterverschluß der vorbeschrienen Art, bei dem es sich um einen am Behälter befestigten oder abnehmbaren Verschluß handelt.

Die vorliegende Erfindung wird weiter durch eine Figur näher erläutert.

Es zeigt:

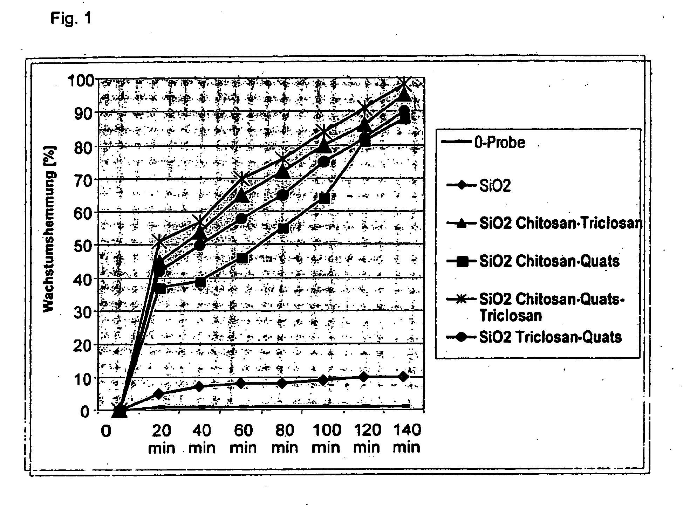

- Fig. 1:: Die Wachstumshemmung der verschiedenen Beschichtungen in % gemes-sen über die Zeit.

Fig. 1 zeigt im Gegensatz zu einer unbeschichteten Probe aber auch einer Probe, die nur Si02 enthält, bereits nach weniger als 20 minuten eine effektive Wachstumshemmung bei Mikroorganismen. Nähers wird nachfolgend in Ausführungsbeispiel 2 erörtert.

Die vorliegende Erfindung wird nachfolgend durch ein Ausführungsbeispiel in Form von Herstellbeispielen und einem Anwendungsbeispiel näher erläutert.

### Ausführungsbeispiel 1 "Kunststoffplatte":

### 1. Herstellung eines wässerigen bioziden SiO₂ - Solgels

Es werden 100 ml Tetraethoxysilan, 400 ml Ethanol und 200 ml 0,01 N Salzsäure bei Umgebungstemperatur (20° C) gemischt und kontinuierlich gerührt (ca. 5 Stunden). Dabei entsteht ein flüssiges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung Triclosan in 5 % Essigsäure gemischt und verrührt. Das so entstandene Solgel kann mittels verschiedener Varianten auf Substrate aus Kunststoff appliziert werden.

### 2. Herstellung der bioziden SiO₂- Beschichtung auf einem Kunststoff-Substrat

Eine Kunststoff-Platte aus PVC in der Abmessung von 30 cm x 30 cm wurde durch Sprühen mit der unter 1 beschriebenen Lösung beschichtet. Anschließend wurde das Substrat bei Umgebungstemperatur 24 Stunden getrocknet, nach Abschluss der Trocknungsphase entstand die Beschichtung von ca. 150 nm Schichtdicke auf der Kunststoff-Platte. Dabei wurde die Oberfläche der Platte vollständig beschichtet.

### 3. Antimikrobielle Überprüfung der Kunststoffplatte

Die Bestimmung der bioziden Wirkung wurde in Anlehnung an EN 1040 durch das Institut Fresenius durchgeführt. Es wurden die Bakterien "Corynebacterium minutissiimum (gram-positiv), Propionibacterium acnes (gram-positiv), Staphylococcus aureus (gram-positiv), Staphylococcus epidermitis (gram-positiv), Strepptococcus mutans (gram-positiv), Escherichia coli (gram-negativ) und Pseudomonas aeruginosa (gram-negativ) verwendet. Mit Hilfe des Verdünnungs-Neutralistions- und Membranfiltrations-Verfahrens konnte gezeigt werden, dass auf der Beschichtungsoberfläche eine Bakterienreduktion um Faktor 10⁵ nach einer Expositionszeit von 60 Minuten zu verzeichnen war.

### Ausführungsbeispiel 2: "Vergleichstest"

Es wurden 8 Kunststoffplatten nach Ausführungsbeispiel 1 für einen Vergleichstest präpariert. In einem ersten Schritt wurden die Platten mit einem stark kationischen Tensid gereinigt, anschließend mit einer Isopropanol-Lösung in einem zweiten Schritt feingereinigt. Die Platten 1 bis 8 wurden wie folgt beschichtet:

| | |
|---|---|
| Platte 1 | unbeschichtet (0-Probe) |
| Platte 2 | SiO₂-Beschichtung mit **Chitosan+Triclosan** (2 %ig) |
| Platte 3 | SiO₂-Beschichtung mit **Chitosan+Triclosan** (5 %ig) |
| Platte 4 | SiO₂-Beschichtung mit **Chitosan+Quats** (2 %ig) |
| Platte 5 | -SiO₂-Beschichtung mit **Chitosan+Quats** (5 %ig) |
| Platte 6 | SiO₂-Beschichtung mit **Triclosan+Quats** (2 %ig) |
| Platte 7 | SiO₂-Beschichtung mit **Triclosan+Quats** (5 %ig) |
| Platte 8 | SiO₂-Beschichtung mit **Chitosan+Triclosan+Quats** (2 %ig) |
| Platte 8 | SiO₂-Beschichtung mit **Chitosan+Triclosan+Quats** (5 %ig) |

Zur Prüfung der antibakteriellen Wirkung der unterschiedlichen Beschichtungen gegen Bakterien wurde der Leuchtbakterientest nach Dr. Lange (DIN 38 412 L 34/341), der als Test auf die Toxizität von Abwässern eingesetzt wird, angewandt. Als Prüfbakterium wurden Leuchtbakterien der Art "Vibrio fischeri" (NRRL-B-11117, gram-negativ) verwendet. Dieser Test beruht auf der Fähigkeit von bestimmten marinen Bakterien (v.a.Meeresbakterien) zu leuchten. Dieses Leuchten, das aufgrund enzymatischer, energiestoffwechsel-abhängiger Prozesse (Luciferin-Luciferase-System) abläuft. Kommen diese Lebewesen jedoch in ein toxisches Medium, so wird ihre Leuchtkraft gehemmt. Die Toxizität von Einzelsubstanzen, Stoffgemischen oder Eluaten wird photometrisch als Leuchthemmung ermittelt. Aus dem Grad der Hemmung des Leuchtens kann man Rückschlüsse auf den Grad der Wachstumshemmung ziehen.

In einem ersten Schritt werden die konservierten Leuchtbakterien vom Typ NRRL-B-11177 in einer Nährlösung reaktiviert und das Ausgangsleuchten photometrisch gemessen und somit die Nullprobe definiert. Danach wird die Leuchtbakterienlösung auf das zu untersuchende Substrat mittels einer Pipette aufgetragen. Nach jeweils 20, 40, 60, 80, 100, 120 und 140 Minuten wird die Leuchtkraft photometrisch gemessen und mit dem Ausgangswert der Nullprobe verglichen. Die Abnahme der Leuchtkraft wird als %-Wert "Wachstumshemmung bezogen auf die Nullprobe" über die Zeit aufgetragen. Eingesetzt wurde der Dr. Lange LUMIStox-Meßplatz, bestehend aus dem LUMIStox-Meßgerät, dem LUMIStherm-Temperiergerät und dem Thermodrucker LD 100 vgl z.B http://www.rz.fh-ulm.de/labore/chemie/AUSSTATTUNG/BIOLUM/Biolum.htm

Figur 1 zeigt die Wachstumshemmung der verschiedenen Beschichtung in % gemessen über die Zeit.

Die Langzeitwirkung hinsichtlich antimikrobieller Wirkung konnte erfolgreich nachgewiesen werden. Auch nach mehr als 12 Monaten konnten signifikante Wachstumsbeschränkungen von über 90 % gezeigt werden.

Ausführungsbeispiel 3: Herstellung eines beschichteten Kunststoffkorkens

### 1. Herstellung eines wässerigen bioziden SiO₂ - Solgels

Es werden 100 ml Tetraethoxysilan, 400 ml Ethanol und 200 ml 0,01 N Salzsäure bei Umgebungstemperatur (20° C) gemischt und kontinuierlich gerührt (ca. 5 Stunden). Dabei entsteht ein flüssiges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung Triclosan in 5 % Essigsäure gemischt und verrührt. Das so entstandene Solgel kann mittels verschiedener Varianten auf Substrate aus Kunststoff appliziert werden.

### 2. Herstellung der bioziden SiO₂ - Beschichtung auf einem Kunststoffweinkorken

Ein Kunststoffkorken wurde in einer 20 %gen Peroxidlösung (H₂O₂) gereinigt und durch Tauchen in der unter 1 beschriebenen Lösung beschichtet.
Anschließend wurde der Korken bei Umgebungstemperatur 24 Stunden getrocknet, nach Abschluss der Trocknungsphase entstand die Beschichtung von ca. 150 nm Schichtdicke auf dem Kunststoffkorken. Dabei wurde die Sole vollständig in ein Gel umgesetzt, welches die Oberfläche und die Poren des Korkens vollständig benetzte und eine homogene, duktile Schicht bildete.

### 3. Antimikrobielle Überprüfung des Korkens

Mit Hilfe des Verdünnungs-Neutralistions- und Membranfiltrations-Verfahrens gemäß Ausführungsbeispiel 2 konnte gezeigt werden, dass auf der Beschichtungsoberfläche eine Bakterienreduktion um Faktor 10⁵ nach einer Expositionszeit von 60 Minuten zu verzeichnen war.

Der zweite Test zur Prüfung der antimikrobiellen Wirkung des Korkens gegen Schimmelpilze wurde der Leuchtbakterientest nach Dr. Lange (DIN 38 412 L 34/341), der als Test auf die Toxizität von Abwässern eingesetzt wird, angewandt, wie in Ausführungsbeispiel 2 beschrieben. Es konnte gezeigt werden, dass bereits nach einer Expositionszeit von 60 Minuten das Wachstum der Leuchtbakterien zu 100 % gestoppt wurde. Die Ergebnisse entsprachen den Ergebnissen in Fig. 1.

## Patentansprüche

1. Verwendung einer Beschichtungszusammensetzung, enthaltend 50 Gew-% bis 99,9 Gew.-%, vorzugsweise 80 % bis 99 Gew-%, eines SiO₂-erzeugenden Mittels, wobei die Beschichtungszusammensetzung 0,1 Gew-% bis 50 Gew-%, vorzugsweise 1 Gew-% bis 20 Gew-%, bezogen auf die Gesamtzusammensetzung, wenigstens eines Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält, als antibakterieller Wirkstoffs,
**dadurch kennzeichnet, dass** der antibakterielle Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

2. Verwendung nach Anspruch 1, **dadurch gekennzeichnet, dass** das SiO₂-erzeugende Mittel ausgewählt ist aus
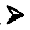 0 bis 100 Gew-%, vorzugsweise 1 bis 99 Gew-% Tetraethoxysilan,
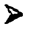 0 bis 100 Gew-%, vorzugsweise 1 bis 99 Gew-% Trimethoxymethylsilan und
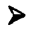 0 bis 100 Gew-%, vorzugsweise 1 bis 99 Gew-% Dimethoxydimethylsilan.

3. Verwendung nach Anspruch 1 oder 2, **dadurch gekennzeichnet, dass** das SiO₂ erzeugende Mittel weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

4. Verwendung nach Anspruch 1, **dadurch gekennzeichnet, dass** das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-diydroxy-diphenylmethan, 3,5,6,3',5',6'-Hexchlor-2,2'-diydroxy-diphenylmethan, 5,5'-Dichlor-2,2'-dihydroxy-diphenylsulfid, 2,4,5,2'4',5' Hexachlordihydroxy-diphenylsulfid, 3,5,3',5'-Tetrachlor-2,2'-Dihydroxy-diphenylsulfid, 4,4'-Dihydroxy-2,2'-dimethyl-diphenylmethan, 2'2-Dihydroxy-5',5-diphenylether oder 2,4,4'-Trichlor-2'-hydroxydiphenyl-ether.

5. Verwendung nach Anspruch 1, oder 4, **dadurch gekennzeichnet, dass** es sich bei dem Phenol um 2,4,4'Trichlor-2'-hydroxy-diphenylether handelt.

6. Verwendung nach Anspruch 1, **dadurch gekennzeichnet, dass** es sich um kationischen, anionischen oder nichtionischen deacetylierten Chitosane und Chitosanderivate handelt, vorzugsweise um Trimethylchitosaniumchlorid, das Dimethyl-*N*-_{*C2 bis C12*-}*a*lkylchitosaniumiodid, quartäre Chitosansalze mit Anionen der Phosphorsäure, O-Carboxymethylchitin-Natriumsalze, *O*-Acylchitosan, N,O-Acylchitosan, *N*-3-Trimethylammonium-2-hydroxypropyl-chitosan und O-TEAE-Chitiniodid.

7. Verwendung nach irgendeinem der Ansprüche 1 oder 6, **dadurch gekennzeichnet, dass** die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise zwischen 2,5 x 10⁵ g/mol und 9,5 x 10⁵ g/mol liegen.

8. Verwendung nach Anspruch 1, **dadurch gekennzeichnet, dass** es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

9. Verwendung nach irgendeinem der Ansprüche 1 oder 4 bis 8, **dadurch gekennzeichnet, dass** die mikrobiellen Wirkstoffe in Mischungsverhältnissen zwischen 0,1 Gew-% bis 99,9 Gew-%, vorzugsweise 1 Gew-% bis 99 Gew-%, insbesondere 5 Gew-% bis 95 Gew-% vorliegen.

10. Verwendung nach irgendeinem der Ansprüche 1 bis 9 weiterhin enthaltend übliche Hilfs- und Zusatzstoffe, insbesondere saure und basische Polykondensations-Katalysatoren und / oder Flouridionen.

11. Verwendung einer nanoskaligen, insbesondere 50 nm bis 300 nm, vorzugsweise zwischen 120 nm und 250 nm dicke Behälterverschlussbeschichtung, als antibakterilees Mittel, enthaltend eine nicht poröse anorganische polymerisierte SiO₂-Schicht, aufgebracht auf einen Behälterverschluss aus Kork, Kunststoff und/oder Glas, wobei die Beschichtung 0,1 Gew-% bis 50 Gew-%, vorzugsweise 1 % bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalzen der alkylierten Phosphorsäure enthält,
**dadurch gekennzeichnet, dass** der antibakterielle Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

12. Verwendung der Behälterverschlussbeschichtung nach Anspruch 11, **dadurch gekennzeichnet, dass** das halogenierte Dihydroxydiphenylmethan, -sulfid und - ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexchlor-2,2'-diydroxy-diphenylmethan, 5,5'-Dichlor-2,2'-dihydroxy-diphenylsulfid, 2,4,5,2'4',5' Hexachlor-dihydroxy-diphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

13. Verwendung nach Anspruch 11 bis 12, **dadurch gekennzeichnet, dass** es sich bei dem Phenol um 2,4,4'Trichlor-2'-hydroxy-diphenylether handelt.

14. Verwendung nach Anspruch 11, **dadurch gekennzeichnet, dass** es sich um kationischen, anionischen oder nichtionischen deacetylierten Chitosane und Chitosanderivate handelt, vorzugsweise um Trimethylchitosaniumchlorid, das - Dimethyl-*N*-*_{C2bis C12}*alkylchitosaniumiodid, quartäre Chitosansalze mit Anionen der Phosphorsäure, O-Carboxymethylchitin-Natriumsalze, *O*-Acylchitosan, N,O-Acylchitosan, N-3-Trimethylammonium-2-hydroxypropyl-chitosan und O-TEAE-Chitiniodid.

15. Verwendung nach Anspruch 11, **dadurch gekennzeichnet, dass** die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise jedoch zwischen 2,5 x 10⁵ g/mol und 9,5 x 10⁵ g/mol liegen.

16. Verwendung nach Anspruch 11, **dadurch gekennzeichnet, dass** es sich um quartärnäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid

17. Verwendung nach Anspruch 11, **dadurch gekennzeichnet, dass** die antimikrobiellen Wirkstoffe in beliebigen Mischungsverhältnissen zwischen 0,1 Gew-% und 99,9 Gew-%, vorzugsweise 1 Gew- % bis 99 Gew-% vorliegen.

18. Verwendung nach Anspruch 11, **dadurch gekennzeichnet, dass** die SiO₂-Schicht wenigstens teilweise aus R-SiOₙ, und/oder R₂-SiOₙ besteht, wobei R = H, Alkyl, Aryl-, Epoxy-alkyl-oder Aminoalkyl- und n = 1,5 oder größer ist.

19. Verwendung nach Anspruch 11 oder 18, **dadurch gekennzeichnet, dass** die SiO₂ Schicht Al₂O₃, TiO₂, ZrO_{2,} MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

20. Verwendung nach vorstehenden Ansprüchen, **dadurch gekennzeichnet, dass** sie auf Kork, Korkgranulat, Glas, Verbundwerkstoffe aus Metallblech und Kunststoff, Kunststoff, insbesondere aus Polyester, Polypropylen, Polyethylen hoher Dichte, Polyethylen niedriger Dichte, Polyacrylnitril, Polyamid, Polyimid, Polyaramid, Aramid, meta-Aramid, para-Aramid, Polytetrafluorethylen, Polyvinylidenfluorid, Polyphenylensulfid, polycyclische Kohlenwasserstoffe, Polycarbonate, Polyethylenterephthalate, Polystyrol, Polymethylmetacrylat aufgebracht ist.

21. Verfahren zur Herstellung einer Behälterverschlussbeschichtung mit antibakteriellen Eigenschaften nach vorstehenden Ansprüchen, **dadurch gekennzeichnet, dass**
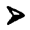 in einem ersten Verfahrensschritt die Bildung eines Solgels mit nanoskaligen Partikeln in an sich bekannter Weise durch Hydrolyse eines Prekursors in Wasser durchgeführt wird und
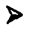 in einem zweiten Verfahrensschritt die in einem hydrophilen Lösemittel gelösten / dispergierten antimikrobiellen Wirkstoffe gemäß Ansprüchen 1 bis 11 der Sole zugeführt werden.

22. Verfahren nach Anspruch 21, **dadurch gekennzeichnet, dass** der Prekusor ausgewählt ist aus der Gruppe der Alkyltriethoxysilane und der Aminopropyltriethoxysilane, dem bis zu 20 Gew.-% Al₂O₃, TiO₂, ZrO₂, MgO und / oder V₂O₅, bezogen auf den Gesamtanteil an SiO₂, zugefügt worden sind und die Umsetzung innerhalb von 24 Stunden bei 20° C erfolgt.

23. Verfahren nach Anspruch 22, **dadurch gekennzeichnet, dass** das hydrophile Lösemittel ausgewählt ist aus Wasser und / oder linearen oder verzweigten Alkoholen mit bis zu 6 Kohlenstoffatomen, insbesondere Wasser enthaltenden Alkoholen, insbesondere Ethanol.

24. Verfahren zur Aufbringung der antibakteriell Wirkenden Zusammensetzung, erhalten nach Ansprüchen 21 bis 23, auf Trägermaterialien gemäß Ansprüchen 20 durch Kontaktieren der Oberfläche, insbesondere Sprühen, Tauchen, Schleudern, Streichen, Begießen, Filmbegießen und Sprühbalken mit wenigstens einer Sprühdüse.

25. Verwendung nach einem der Ansprüche 1 bis 20, **dadurch gekennzeichnet, dass** die antibakterielle Beschichtung eine Barriere gegen Stoffe aus der Atmosphäre und / oder Stoffe, die in direktem Kontakt mit dem Behälterverschluss stehen und / oder im Verschluss enthalten oder aus diesem abgespalten werden, bildet.

26. Verwendung nach einen der Ansprüche 1 bis 20 und 25, **dadurch gekennzeichnet, dass** es sich bei dem antibakteriell beschichteten Verschluß um einen am Behälter befestigten oder abnehmbaren Verschluß handelt.

27. Antimikrobielle Behälterverschlussbeschichtung erhalten nach einem der vorstehenden Ansprüche 19 bis 23, **dadurch gekennzeichnet, dass** sie auf ein Kunststoffverbundmaterial und / oder ein Verbundmaterial aus Kunststoff und/oder Agglomeratkork, vorzugsweise ein mit Kunststoff beschichteter Naturkork aufgebracht ist.

## Claims

1. Use of a coating composition comprising 50 weight-% up to 99.9 weight-%, preferably 80 weight-% up to 99 weight-% of an SiO₂-creating agent whereby the coating composition comprises 0.1 weight-% up to 50 weight-%, preferably 1 weight-% up to 20 weight-%, related to the total composition of at least one agent in terms of cationic, anionic or non-ionic deacetylated chitosan and chitosan derivatives and / or phenols of the group of halogenated dihydroxydiphenyl methanes, dihydroxydiphenyl sulphides, and dihydroxydiphenyl ether and / or substituted quaternary ammonium salts of the alkylated phosphoric acid, as an antibacterial active agent, **characterised in that** the said antibacterial active agent is chosen from at least 2 compounds of the 3 following compound classes in form of a cationic, anionic or non-ionic deacetylated chitosans and chitosan derivatives and / or phenols of the group of halogenated dihydroxydiphenyl methanes, dihydroxydiphenyl sulphides, and dihydroxydiphenyl ether and / or substituted quaternary ammonium salts of the alkylated phosphoric acid.

2. Use according to claim 1, **characterised in that** the SiO₂-creating agent is selected from
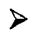 0 up to 100 weight-% preferably 1 up to 99 weight-% tetraethoxysilane
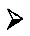 0 up to 100 weight-% preferably 1 up to 99 weight-% trimethoxymethylsilane and
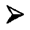 0 up to 100 weight-% preferably 1 up to 99 weight-% dimethoxydimethylsilane.

3. Use according to claim 1 or 2 **characterised in that** the SiO₂ creating agent further comprises up to 20 weight-% Al₂O₃, TiO₂, ZrO₂, MgO and/or V₂O₅, whereas the additives are present at any mixing ratio, preferably in mixing ratios between 0.1 weight-% and 50 weight-% from the group of Al₂O₃, TiO₂, ZrO₂, MgO and V₂O₅ more preferably in mixing ratios between 1 weight-% and 20 weight-% from the group of Al₂O₃, TiO₂ and ZrO₂.

4. Use according to claim 1, **characterised in that** the halogenated dihydroxydiphenyl methane, dihydroxydiphenyl sulphide and dihydroxydiphenyl ether is selected from 5,5'-dichloro-2,2'-diydroxydiphenyl methane, 3,5,3',5'-tetrachloro-4,4'-dihydroxy-diphenyl methane, 3,5,6,3',5',6'-hexachloro-2,2'-dihydroxydiphenyl methane, 5,5'-dichloro-2,2'-dihydroxydiphenyl sulphide, 2,4,5,2',4',5' hexachlorodihydroxydiphenyl sulphide, 3,5,3',5'-tetrachlor-2,2'-dihydroxydiphenyl sulphide, 4,4'-dihydroxy-2,2'-dimethyldiphenyl methane, 2'2-dihydroxy-5',5-diphenyl ether or 2,4,4'-trichloro-2'-hydroxydiphenyl ether.

5. Use according to claim 1, or 4 **characterised in that** said phenol is 2,4,4'-trichloro-2'-hydroxydiphenyl ether.

6. Use according to claim 1, **characterised in that** said chitosans are cationic, anionic or nonionic deacetylated chitosans and chitosan derivatives, preferably trimethylchitosanium chloride, the dimethyl-*N*-_{C2} to _{C12}-alkylchitosanium iodide, quaternary chitosan salts with anions of the phosphoric acid, *O-*carboxymethylchitin sodium salts, *O*-acylchitosan, *N,O*-acylchitosan, N-3-trimethylammonium-2-hydroxypropyl-chitosan and *O*-TEAE-chitin iodide.

7. Use according to any of claim 1 or 6 **characterised in that** the chitosans and chitsan derivatives are low molecular chitosans and chitosan derivates, whereas the molecular weights are situated between 1.0 x 10⁵ g/mol and 3.5 x 10⁶ g/mol, however preferably between 2.5 x 10⁵ g/mol and 9.5 x 10⁵ g/mol.

8. Use according to claim 1 wherein said it concerns quaternary ammonium salts of the alkylated phosphoric acid, whereas each of the alkyl remains, presents independently of each other 1 to 12 carbon atoms and/or halogenated ammonium salts, preferably cetyltrimethylammoniumbromide, didecyldimethyl-ammonium chloride, hexadecylpyridiniumchloride and polyoxyalkyltrialkylammoniumchloride.

9. Use according to any of claims 1 or 4 to 8 **characterised in that** the microbial active agents are present in mixing ratios between 0.1 weight-% to 99.9 weight-%, preferably 1 weight-% to 99 weight-%, more preferably 5 weight-% to 95 weight-%.

10. Use according to any of claim 1 to 9 further comprising usual additives and auxiliary materials especially acid and alkaline polycondensation-catalysts and / or fluoride ions.

11. Use of a nano scalic container closure coating, having a thickness of preferably 50 nm to 500 nm, more preferably between 120 nm and 250 nm as an antibacterial active agent containing a non-porous inorganic polymerised SiO₂-layer applied on a container closure made of cork, plastic and / or glass, whereas the coating contains 0.1 weight-% up to 50 weight-% preferably 1 weight-% up to 20 weight-%, related to the total composition, at least of one antibacterial active agent in form of cationic, anionic or non-ionic deacetylated chitosans and chitosan derivates and / or phenols of the group of halogenated dihydroxydiphenyl methanes, dihydroxydiphenyl sulphides, and dihydroxydiphenyl ether and / or substituted quaternary ammonium salts of the alkylated phosphoric acid **characterised in that** the antibacterial active agent is selected from at least 2 compounds of the 3 following compound classes in form of cationic, anionic or non-ionic deacetylated chitosans and chitosan derivates and / or phenols of the group of halogenated dihydroxydiphenyl methanes, dihydroxydiphenyl sulphides, and dihydroxydiphenyl ether and / or substituted quaternary ammonium salts of the alkylated phosphoric acid.

12. Use of container closure coating in accordance with claim 11 **characterised in that** the halogenated dihydroxydiphenyl methane, dihydroxydiphenyl sulphide and dihydroxydiphenyl ether is selected from 5,5'-dichloro-2,2'-diydroxydiphenyl methane, 3,5,3',5'-tetrachloro-4,4'-dihydroxydiphenyl methane, 3,5,6,3',5',6'-hexachloro-2,2'-dihydroxydiphenyl methane, 5,5'-dichloro-2,2'-dihydroxydiphenyl sulphide, 2,4,5,2',4',5' hexachlorodihydroxydiphenyl sulphide, 3,5,3',5'-tetrachloro-2,2'-dihydroxydiphenyl sulphide, 4,4'-dihydroxy-2,2'-dimethyl-diphenyl methane, 2'2-dihydroxy-5',5-diphenyl ether or 2,4,4'-trichloro-2'-hydroxydiphenyl ether.

13. Use according claim 11 to 12 **characterised in that** said phenol is 2,4,4' trichlor-2'-hydroxydiphenyl ether.

14. Use according to claim 11 **characterised in that** it concerns cationic, anionic or nonionic deacetylated chitosans and chitosan derivatives, preferably trimethylchitosanium chloride, the dimethyl-*N*-_{C2} to _{C12}-alkylchitosanium iodide, quaternary chitosan salts with anions of the phosphoric acid, *O-*carboxymethylchitin sodium salts, *O*-acylchitosan, *N,O*-acylchitosan, N-3-trimethylammonium-2-hydroxypropyl-chitosane and *O*-TEAE-chitin iodide.

15. Use according to claim 11 **characterised in that** chitosanes and chitosane derivatives are low molecular chitosanes and chitosane derivates, whereas the molecular weights are between 1.0 x 10⁵ g/mol and 3.5 x 10⁶ g/mol, preferably between 2.5 x 10⁵ g/mol and 9.5 x 10⁵ g/mol.

16. Use according to claim 11 **characterised in that** it concerns quaternary ammonium salts of the alkylated phosphoric acid, whereas each of the alkyl residues, independently of each other has 1 to 12 carbon atoms and / or halogenated ammonium salts, preferably cetyltrimethylammonium bromide, didecyldimethyl-ammonium chloride, hexadecylpyridinium chloride and polyoxyalkyltrialkylammonium chloride.

17. Use according to claim 11 **characterised in that** the microbial active agents are present in any mixing ratios between 0.1 weight-% to 99.9 weight-%, preferably 1 weight-% to 99 weight-%.

18. Use according to claim 11 **characterised in that** said SiO₂-layer comprises at least partly of R-SiOₙ, and/or R₂-SiOₙ, wherein R is H, alkyl, aryl-, epoxy-alkyl- or aminoalkyl- and n is at least 1.5.

19. Use according to any of claim 11 or 18 **characterised in that** the SiO₂ layer comprises Al₂O₃, TiO₂, ZrO₂, MgO and/or V₂O₅ in any mixing ratio, preferably in mixing ratios between 0,1 weight-% and 50 % weight-% from the group of Al₂O₃,TiO₂, ZrO₂, MgO and V₂O₅ especially favoured in mixing ratios between 1 weight-% and 20 weight-% from the group of Al₂O₃, TiO₂ and ZrO₂.

20. Use according the above mentioned claims, **characterised in that** it is applied on cork, cork granulate, glass, composite material of sheet metal and plastic, plastics, especially made of polyester, polypropylene, polyethylene with high density, polyethylene with low density, polyacrylonitrile, polyamide, polyimide, polyaramide, aramide, meta-aramide, para-aramide, Teflon, polyvinylidene fluoride, polyphenylensulfide, polycyclic hydrocarbons, polycarbonates, polyethylene terephthalate, polystyrene, polymethyl methacrylate.

21. Process for making a container closure coating having antibacterial characteristics according the above mentioned claims **characterised in that**
• in a first process step the formation of a sol-gel with nano-scaled particles has been carried out in a *per se* known manner by a hydrolysis of a precursor in water and
• in a second process step antimicrobial agents dissolved / dispersed in a hydrophilic solvent are supplied to the brine according to claims 1 to 11.

22. The Process according to claim 21 **characterised in that** the precursor is selected from the group of alkyltriethoxysilanes and of aminopropyltriethoxysilanes to whom 20 weight-% Al₂O₃,TiO₂, ZrO₂, MgO and/or V₂O₅ related to the total share on SiO₂, has been added and the conversion follows within 24 hours at a temperature of 20°C.

23. The process according to claim 22 **characterised in that** the hydrophilic solvent is selected from water and/or linear or branched alcohols with up to 6 carbon atoms, in particular water containing alcohols, especially ethanol.

24. Process for the application of the coating composition, obtained according to any of the claims 21 to 23 on the carrier materials according to claim 20 through contacting the surface in particular by spraying, submerging, hurling, coating, dousing, foularding, casting and spray beaming with at least one spray nozzle.

25. The use according to one of the claims 1 to 20 **characterised in that** the antibacterial coating creates a barrier against substances out of the atmosphere and / or substances which are in direct contact with the container closure and / or are contained in the closure or are separated of it.

26. The container closure obtainable according to one of the claims 1 to 20 and 25, **characterised in that** it concerns an antibacterial coated closure that is fixed on the container or is removable.

27. Antimicrobial container closure coating obtained by one of the above mentioned claims 19 to 23 **characterised in that** it is applied on a plastic composite material and / or a composite material of plastic and / or agglomerate cork, preferably a natural cork coated with plastic.

## Revendications

1. Utilisation d'une composition de revêtement, comportant 50 % à 99 % en poids de préférence de 80 % à 99 % en poids d'un agent générer SiO₂, le revêtement contenant de 0,1 % à 50 % en poids de préférence de 1 % à 20 % en poids d'au moins un agent par rapport à l'ensemble de la composition, sous forme de chitosanes et dérivés de chitosanes et / ou de phénols cationiques, anioniques ou non ioniques déacétylés du groupe de dihydroxydiphénylméthane halogéné, dihydroxydiphenylméthane sulfure et / ou dihydroxydiphenylméthane éther et / ou de sels d'ammonium quaternaires de l'acide phosphorique alkylé, **caractérisé en ce que** l'agent est choisi parmi au moins deux composés des 3 classes suivantes sous forme de chitosanes et dérivés de chitosanes et / ou de phénols cationiques, anioniques ou non ioniques déacétylés du groupe de dihydroxydiphénylméthane halogéné, dihydroxydiphenylméthane sulfure et / ou dihydroxydiphenylméthane éther et/ou de sels d'ammonium quaternaires de l'acide phosphorique alkylé.

2. Utilisation selon revendication 1 **caractérisé en ce que** l'agent générer SiO₂ est choisi parmi
○ 0 à 100 % en poids de préférence de1 à 99 % en poids tétraéthoxysilane,
○ 0 à 100 % en poids de préférence 1 à 99 % en poids triméthoxyméthylsilane et
○ 0 à 100 % en poids de préférence 1 à 99 % en poids diméthoxydiméthylsilane.

3. Utilisation selon revendication 1 ou 2 **caractérisé en ce que** l'agent générer SiO₂ contient en outre jusqu'à 20 % en poids Al₂O₃, TiO₂, ZrO₂, MgO et/ou de V₂O₅ et des additifs sont présents dans une quantité quelconque de préférence entre 1 % et 50 % en poids des groupes Al₂O₃, TiO₂, ZrO₂., MgO et V₂O₅ préféré notamment dans une dosage de 1 % en poids à 20 % en poids de la groupe Al₂O₃, Ti0₂ et ZrO₂.

4. Utilisation selon la revendication 1, **caractérisé en ce que** le dihydroxydiphénylméthane halogéné, le dihydroxydiphenylméthane sulfure et / ou le dihydroxydiphenylméthane éther est choisi parmi le 5,5'-dichloro-2,2'-dihydroxy diphénylméthane, le 3,5,3',5'-tétrachloro-4,4'-dihydroxy-diphénylméthane, le 3,5,6,3',5',6'-hexachloro-2,2'- dihydroxy-diphénylméthane, le sulfure de 5,5' dichloro-2,2'-dihydroxy-diphényle, le sulfure de 2,4,5,2',4',5'-hexachlorodihydroxy-diphényle, le sulfure de 3,5,3',5'-tétrachloro-2,2'-hydroxy-diphényle, le 4,4'-hydroxy-2,2'-diméthyl diphénylméthane, le 2'2-dihydroxy-5',5-diphényléther ou le 2,2,4-trichloro-2'-hydroxydiphényléther.

5. Utilisation selon les revendications 1 ou 4, **caractérisé en ce que** le phénol est le 2,4,4'-trichloro-2'- hydroxydiphényléther.

6. Utilisation selon la revendication 1 **caractérisé en ce qu'**il s'agit de chitosanes ou de dérivés de chitosanes cationiques, anioniques ou non ioniques déacétylés, de préférence de chlorure de triméthylchitosanium contenant de l'iodure de diméthyl-N-*_{C2 à C12}*alkylchitosanium, des sels quaternaires du chitosane avec des anions d'acide phosphorique, des sels de sodium de la *O*-carboxyméthylchitine, du *O*-acylchitosane, du *N,O*-acylchitosane, du N-3trimethylammonium-2-hydroxypropylchitosane et de l'iodure de la *O*-TEAE chitine.

7. Utilisation selon une des revendications 1 ou 6, **caractérisé en ce que** les chisotanes et les dérivés de chitosanes sont des chitosanes et des dérivés de chitosanes de faible masse moléculaire, celle-ci se situant entre 1,0 x 10⁵ g/mol et 3,5 x 10⁶ g/mol, et de préférence entre 2,5 x 10⁵ g/mol et 9,5 x 10⁵ g/mol.

8. Utilisation selon la revendication 1, **caractérisé en ce qu'**il s'agit de sels d'ammonium quaternaires de l'acide phosphorique alkylé, chacun des restes d'alkyle présentant indépendamment l'un de l'autre de 1 à 12 atomes de carbone et / ou des sels d'ammonium halogénés, de préférence le bromure de cetyltrimethylammonium, le chlorure de didecyldimethylammonium, le chlorure d'hexadecylpyridinium et le chlorure de polyoxyalkyltrialkylammonium.

9. Utilisation selon une des revendications 1 ou 4 à 8, **caractérisé en ce que** les agents antimicrobiens représentent entre 0,1 % et 99,9 % en poids du mélange, de préférence de 1 % à 99 % en poids en particulier de 5 % à 95 % en poids.

10. Utilisation selon une des revendications 1 à 9 en outre comportant des matières auxiliaires et des additifs notamment des catalyseurs de polycondensation et / ou des ions fluorures acides et basiques.

11. Utilisation pour couvercle de récipient antibactériel à l'échelle nanométrique, notamment de 50 à 300 nm et de préférence entre 120 et 250 nm contenant une couche de SiO₂ polymérisée anorganique non poreuse, appliquée sur un couvercle en liège, de matière plastique et/ou en verre, le revêtement contenant de 0,1 % à 50 % en poids, et de préférence de 1 % à 20 % en poids d'au moins un agent antibactériel par rapport à l'ensemble de la composition, sous forme de chisotanes et dérivés de chisotanes et/ou de phénols cationiques, anioniques ou non ioniques déacétylés du groupe des dihydroxydiphénylméthane halogénés, le dihydroxydiphenylméthane sulfures et / ou dihydroxydiphenylméthane éthers et / ou de sels d'ammonium quaternaires de l'acide phosphorique alkylé, **caractérisé en ce que** l'agent est choisi parmi au moins deux composés des 3 classes suivantes sous forme de chitosanes et dérivés de chitosanes et / ou de phénols cationiques, anioniques ou non ioniques déacétylés du groupe des dihydroxydiphénylméthane halogéné, dihydroxydiphenylméthane sulfure et / ou dihydroxydiphenylméthane éther et / ou de sels d'ammonium quaternaires de l'acide phosphorique alkylé.

12. Utilisation pour couvercle de récipient selon la revendication 11, **caractérisé en ce que** le le dihydroxydiphénylméthane halogéné, le dihydroxydiphenylméthane sulfure et / ou dihydroxydiphenylméthane éther est choisi parmi le 5,5'-dichloro-2,2'-dihydroxy diphénylméthane, le 3,5,3',5'-tétrachloro-4,4'-dihydroxy-diphénylméthane, le 3,5,6,3',5',6'-hexachloro-2,2'- dihydroxy-diphénylméthane, le sulfure de 5,5' dichloro-2,2'-dihydroxy-diphényle, le sulfure de 2,4,5,2',4',5'-hexachlorodihydroxy-diphényle, le sulfure de 3,5,3',5'-tétrachloro-2,2'-hydroxy-diphényle, le 4,4'-hydroxy-2,2'-diméthyl diphénylméthane, le 2'2-dihydroxy-5',5-diphényléther ou le 2,2,4-trichloro-2'-hydroxydiphényléther.

13. Utilisation selon les revendications 11 et 12 **caractérisé en ce que** le phénol est le 2,4,4'-trichloro-2'-hydroxy diphényléther.

14. Utilisation selon la revendication 11 **caractérisé en ce qu'**il s'agit de chitosanes ou de dérivés de chitosanes cationiques, anioniques ou non ioniques déacétylés, de préférence de chlorure de triméthylchitosanium contenant de l'iodure de diméthyl-N-*_{C2 à C12}*alkylchitosanium, des sels quaternaires du chitosane avec des anions d'acide phosphorique, des sels de sodium de la O-carboxyméthylchitine, du O-acylchitosane, du *N,O*-Acylchitosane, du N-3trimethylammonium-2-hydroxypropylchitosane et de l'iodure de la *O*-TEAE chitine.

15. Utilisation selon la revendication 11 **caractérisé en ce que** les chitosanes et les dérivés de chitosanes sont des chitosanes et des dérivés de chitosanes de faible masse moléculaire, celle-ci se situant entre 1,0 x 10⁵ g/mol et 3,5 x 10⁶ g/mol, et de préférence entre 2,5 x 10⁵ g/mol et 9,5 x 10⁵ g/mol.

16. Utilisation selon la revendication 11, **caractérisé en ce qu'**il s'agit de sels d'ammonium quaternaires de l'acide phosphorique alkylé, chacun des restes d'alkyle présentant indépendamment l'un de l'autre de 1 à 12 atomes de carbone et/ou des sels d'ammonium halogénés, de préférence le bromure de cetyltrimethylammonium, le chlorure de didecyldimethylammonium, le chlorure d'hexadecylpyridinium et le chlorure de polyoxyalkyltrialkylammonium.

17. Utilisation selon la revendication 11, **caractérisé en ce que** les agents antimicrobiens représentent entre 0,1 % et 99,9 % en poids du mélange, de préférence de 1 % à 99 % en poids.

18. Utilisation selon la revendication 11, **caractérisé en ce que** la couche de SiO₂ est composée au moins en partie de R-SiOₙ et/ou R₂-SiOₙ, R correspondant à hydrogène, alkyle, aryl-, epoxy-alkyle- ou aminoalkyle et n étant égal ou supérieur à 1,5.

19. Utilisation selon les revendications 11 ou 18, **caractérisé en ce que** la couche de SiO₂ contient une quantité quelconque de Al₂O₃, TiO₂, ZrO₂, MgO et / ou de V₂O₅ de préférence entre 0,1 % et 50 % en poids des groupes Al₂O₃, TiO₂ et ZrO₂, MgO et de V₂O₅ notamment préféré dans une quantité quelconque entre 1 % et 20 % en poids des groupes de Al₂O₃, TiO₂ et ZrO₂.

20. Utilisation selon les revendications précédentes, **caractérisé en ce que** le revêtement est appliqué sur liège, granulés de liège, verre, matériaux composites en tôle métallique et en matière plastique ; la matière plastique étant plus particulièrement à base de polyester, polypropylène, polyéthylène haute densité, polyéthylène faible densité, polyacrylonitrile, polyamide, polyimide, polyaramide, aramide, méta-aramide, para-aramide, polytétrafluoréthylène, fluorure de polyvinylidène, sulfure de polyphénylène, hydrocarbures polycycliques, polycarbonates, polyéthylène téréphthalate, polystyrène, polyméthacrylate de méthyle.

21. Procédé de fabrication d'un revêtement pour couvercle de récipient avec des qualités antibactérielles selon les revendications précédentes, **caractérisé en ce que**
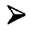 dans une première phase du procédé un sol-gel est fabriqué avec des particules à l'échelle nanométrique de manière déjà connue par l'hydrolyse d'un précurseur dans l'eau et
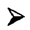 dans une deuxième phase du procédé, les agents antimicrobiens selon les revendications 1 à 11 dissous/dispersés dans un solvant hydrophile sont ajoutés à l'eau saline.

22. Procédé selon la revendication 21, **caractérisé en ce que** le précurseur est choisi parmi le groupe des alkyltriéthoxysilanes et des aminopropyltriéthoxysilanes, auxquels ont été ajoutés jusqu'à 20 % en poids de Al₂O₃, TiO₂, ZrO₂, MgO et/ou de V₂O₅ par rapport à la quantité totale de SiO₂, et que la mise en oeuvre a lieu dans les 24 heures à 20° C.

23. Procédé selon la revendication 22, **caractérisé en ce que** le solvant hydrophile est composé d'eau et/ou d'alcools linéaires ou non-linéaires avec jusqu'à 6 atomes de carbone, notamment d'alcools contenant de l'eau et en particulier de l'éthanol.

24. Procédé destiné à appliquer la composition obtenue selon les revendications 21 à 23 sur les supports selon la revendication 20 par contact avec la surface, notamment par pulvérisation, immersion, centrifugation, peinture, arrosage, coulage du film, pulvérisation par rampe avec au moins une buse.

25. Utilisation selon les revendications 1 à 20, **caractérisé en ce que** le revêtement antibactérien forme une couche de protection contre les particules se trouvant dans l'atmosphère et/ou les particules en contact direct avec le couvercle du récipient et/ou contenu dans le couvercle ou s'en détachant.

26. Utilisation selon un des revendications 1 à 20 et 25 **caractérisé en ce qu'**il s'agit d'un couvercle fixé sur le récipient ou amovible.

27. Revêtement antimicrobien pour couvercle de récipient obtenu selon l'une des revendications précédentes 19 à 23, **caractérisé en ce que** le revêtement est appliqué sur un matériau composite plastique et / ou un matériau composite en plastique et / ou en liège aggloméré, de préférence sur un liège revêtu de matière plastique.
